# EUROPÄISCHE PATENTSCHRIFT

(11) **EP 4 341 068 B1**
(45) Veröffentlichungstag und Bekanntmachung des Hinweises auf die Patenterteilung: **31.12.2025**
(21) Anmeldenummer: 22712362.7
(22) Anmeldetag: 09.03.2022
(51) Int. Cl.: B29C 64/209, B29C 64/112, B33Y 30/00, B22F 10/22, B29C 64/227, B22F 10/12, B29C 64/241, B22F 12/53

(54) **VORRICHTUNG ZUR ADDITIVEN FERTIGUNG EINES BAUTEILS**
DEVICE FOR ADDITIVELY MANUFACTURING A COMPONENT
DISPOSITIF DE FABRICATION ADDITIVE D'UN COMPOSANT

(30) Priorität: 05.07.2021 DE 102021117285
(43) Veröffentlichungstag der Anmeldung: 27.03.2024
(73) Patentinhaber: Grob-Werke GmbH & Co. KG, 87719 Mindelheim (DE)
(72) Erfinder: GLASSCHRÖDER, Johannes, 86356 Neusäß (DE); LEUSCH, Oliver, 86159 Augsburg (DE); MIKLEC, Christian, 86825 Bad Wörishofen (DE); HIMMEL, Benjamin, 81249 München (DE); LANG, Andreas, 86833 Ettringen (DE); KIRCHNER, Steffen, 86859 Igling (DE); OTTER, Martin, 87700 Memmingen (DE)
(74) Vertreter: Kramer Barske Schmidtchen Patentanwälte PartG mbB
(86) Internationale Anmeldenummer: PCT/EP2022/056029
(87) Internationale Veröffentlichungsnummer: WO 2023/280445

(56) Entgegenhaltungen:
- WO-A1-2015/081599
- CN-A- 108 274 755
- CN-A- 108 407 295
- CN-A- 110 328 851
- CN-A- 110 481 025
- CN-A- 111 168 994
- CN-A- 112 140 530
- CN-U- 205 326 285
- DE-A1- 102005 028 297
- DE-A1- 102019 219 867
- KR-B1- 102 088 676
- US-B1- 9 073 366

## Beschreibung

Die vorliegende Offenbarung betrifft eine Vorrichtung zur additiven Fertigung eines Bauteils, insbesondere durch tropfenweise Aufbringen eines flüssigen Materials mittels eines Drucckopfs.

Additive Fertigungsverfahren zeichnen sich durch einen hohen Grad an Gestaltungsfreiheit und durch die werkzeuglose Fertigung aus. Daher eignen sie sich besonders für Einzelteile und Bauteile mit einem hohen Grad an Komplexität, die mit konventionellen Fertigungsverfahren nicht oder mit nur großem Aufwand hergestellt werden können. Bei diesen additiven Fertigungsverfahren werden die Werkstücke basierend auf digitalen Modellen schichtweise oder elementweise aufgebaut.

Ein typisches Verfahren für den Aufbau metallischer Bauteile ist das sogenannte "Material Jetting" (MJT) Verfahren, bei dem schmelzflüssiges Material von einem Druckkopf durch eine oder mehrere individuell angesteuerte Düsen direkt auf eine Bauplattform gedruckt wird.

Bei dem oben erwähnten additiven Fertigungsverfahren, das auch als "Liquid Metal Printing" (LMP) bekannt ist, wird beim Erzeugen eines Tropfens aus einer flüssigen Schmelze häufig eine Düse verwendet, bei der die Düsenöffnung ein integraler Bestandteil des Druckkopfs ist. Bei einer in der WO 2020/120568 A1 gezeigten Vorrichtung wird in den Druckkopf eine spezielle Düsenplatte eingesetzt, die mit einer Spannmutter kraftschlüssig am die Schmelze enthaltenden Tiegel befestigt wird.

US 9 073 366 B1 offenbart ein rotierendes Druckkopfmodul mit mehreren Patronen.

KR 102 088 676 B1 offenbart einen weiteren Druckkopf. Entsprechendes gilt für CN 110 481 025 A und CN 111 168 994 A.

Aufgabe der Erfindung ist es, eine Möglichkeit zu schaffen, bekannte Systeme insbesondere im Hinblick auf eine erhöhte Effizienz bei der Fertigung von Bauteilen aus schmelzflüssigem Material zu verbessern.

Diese Aufgabe wird gelöst mit der Vorrichtung nach Anspruch 1. Weiterbildungen der Erfindung sind in den abhängigen Ansprüchen gegeben.

Die eingangs erwähnte Düse des Druckkopfes unterliegt typischerweise einem Verschleiß. Versagt daher dieses Bauteil während einer Fertigung, führt dies in der Regel zu einem Prozessabbruch, insbesondere dann, wenn keine Inline-Reinigung der Düse vorgenommen wird. Im Anschluss an solch einen Prozessabbruch muss dann entweder die Düsenplatte oder andere Bestandteile des Druckkopfes mit der Düsenplatte ausgetauscht werden. Dies kann beispielsweise durch Vorsehen einer Spannmutter, die eine Düsenplatte kraftschlüssig und lösbar mit dem Tiegel verbindet, ermöglicht werden.

Die Düsenspannmutter ist aus fertigungstechnischen Gründen bevorzugt aus einem metallischen Werkstoff gefertigt. Auf der anderen Seite handelt es sich bei den meisten anderen Komponenten eines typischerweise verwendeten Druckkopfs bevorzugt um technische Keramiken, die eine geringe Wärmeausdehnung aufweisen. Durch die fehlenden Verformungseigenschaften der Keramiken in Kombination mit dem Einsatz von Fluiden ergeben sich somit Herausforderungen bezüglich der Abdichtung beispielsweise der Düsenplatte gegenüber dem Tiegel oder einer in dem Tiegel vorgesehenen Führungshülse, um ein Auslaufen der flüssigen Schmelze zu verhindern. Dies ist insbesondere deshalb von Bedeutung, weil der Tiegel während der Inbetriebnahme und des Fertigungsprozesses mit einem Überdruck beaufschlagt wird, der die Tropfenerzeugung begünstigt. Daher wird ein elastischer Anteil eines Bauteils vorgesehen, so dass eine ausreichende Befestigungskraft beispielsweise der Spannmutter an der keramischen Führungshülse erhalten wird. Ferner ist es von Vorteil, wenn der metallische Werkstoff des Bauteils im Wesentlichen denselben Wärmeausdehnungskoeffizient wie die Keramikkomponente aufweist. Bei der vorliegenden Erfindung wurde insbesondere erkannt, dass durch eine plastische Verformung eines hitzebeständigen Dichtrings ein Auslaufen der Schmelze an der Düsenplatte unterbunden werden kann.

Die Düsenplatte selbst ist ein Kernelement bei der Tropfenerzeugung und stellt hohe Anforderungen in Bezug auf den eingesetzten Werkstoff. Eine weitere Herausforderung ergibt sich durch den bereits erwähnten prozessbedingten Verschleiß der Düsenplatte. Insbesondere bei Prozesszeiten von mehreren Tagen bedingt dies eine Inline-Reinigung oder einen mehrfachen Wechsel der Düsenplatte während des Druckprozesses, um eine gleichbleibende Tropfenqualität zu gewährleisten. Dabei wurde festgestellt, dass eine Inline-Reinigung insbesondere Anhaftungen in der Düsenbohrung, wie sie beispielsweise bei der Verarbeitung von magnesiumhaltigen Legierungen auftreten, nicht beseitigen kann. Ferner kann durch eine mechanische Einwirkung auf die Düse das Düsenloch verunreinigt werden, oder es kann zu einer Beschädigung der Düse und der Abrisskante für die Tropfen kommen. Zur Verringerung von Prozessnebenzeiten sollte der Wechsel der Düsenplatte daher während des Prozesses, also im heißen Zustand, erfolgen. Die hierin offenbarte Lösung ermöglicht einen Wechsel der Düsenplatte während eines Druckprozesses, insbesondere bei gefülltem und aufgeheiztem Tiegel.

Eine weitere Erkenntnis, die der vorliegenden Erfindung zugrunde liegt, besteht darin, dass es neben der bereits erwähnten Möglichkeit, die Düsenplatte während des Fertigungsprozesses zu erneuern, auch notwendig sein kann, den Tiegel während des Aufbauprozesses zu wechseln. Beispielsweise ist dies dann erforderlich, wenn trotz Einbau einer neuen Düse keine reproduzierbare Tropfenqualität erhalten wird, was beispielsweise an Verunreinigungen in der Kolbenführung oder an einem zu großen Schlackeanteil im Tiegel liegen kann. Ferner besteht bei dem LMP-Verfahren die technische Möglichkeit, unterschiedliche Materialien während eines Aufbauprozesses zu verarbeiten. Um den parallelen Einsatz von zwei separaten Druccköpfen zu vermeiden und die Tiegel sortenrein zu halten, sollte für jedes Material bzw. jede Legierung ein separater Tiegel eingesetzt werden. Außerdem kann die Auftragsrate und damit die Wirtschaftlichkeit bzw. der Detailgrad der Bauteile erhöht werden, wenn unterschiedliche Druckköpfe mit unterschiedlichen Durchmessern der Düsenbohrung eingesetzt werden. So kann ein kleinerer Durchmesser für einen höheren Detailgrad verwendet werden, während ein größerer Durchmesser für eine Erhöhung der Auftragsrate verwendet werden kann.

Daher ist es vorteilhaft, wenn für jedes Material bzw. für jede Legierung ein separater Tiegel eingesetzt wird. Dies bedingt jedoch den Wechsel des Tiegels und gegebenenfalls des Aktors während des laufenden Prozesses. Es wird dazu ein Tiegelwechsler vorgesehen, mit dem die Tiegel mit Düsenplatte sowie gegebenenfalls auch der Aktor während des laufenden Prozesses ausgetauscht werden können.

Die hierin beschriebene Düsenplatte ermöglicht eine zuverlässige Abdichtung gegenüber den keramischen Komponenten des Druckkopfs, und damit eine Verhinderung des Auslaufens der Schmelze trotz des Überdrucks im Tiegel.

Ferner führt die Möglichkeit des Austauschs der Düsenplatte zu einer Verringerung der Tiegelkosten, einer Verringerung des Reinigungsaufwands durch Verwendung der austauschbaren Düsenplatten und einer Möglichkeit einer Variation des Durchmessers der Düsenbohrung während eines Prozesses. Zudem kann durch den Austausch der Düsenplatte die Tropfenqualität erhöht werden.

Darüber hinaus schafft die vorliegende Erfindung eine Möglichkeit, während des Druckprozesses einen Tiegelwechsel vorzunehmen und gegebenenfalls auch auf einfache und automatisierbare Weise den Kolben zu entnehmen.

Ausführungsformen und Weiterbildungen der Erfindung werden im Folgenden anhand der Figuren beschrieben. Es zeigen:
Fig. 1 eine teilweise geschnittene perspektivische Ansicht eines Druckkopfs gemäß der vorliegenden Offenbarung;
Fig. 2 eine perspektivische Ansicht einer beispielhaften Düse für den in Fig. 1 gezeigten Druckkopf;
Fig. 3 eine Draufsicht sowie zwei Schnittansichten eines Magazins mit mehreren Düsen gemäß der vorliegenden Offenbarung;
Fig. 4 eine Ansicht einer beispielhaften Vorrichtung zum Durchführen eines Tiegelwechsels während eines Prozesses; und
Fig. 5 eine schematische Ansicht eines Teils eines Druckkopfs sowie zwei zugehörige Schnittansichten.

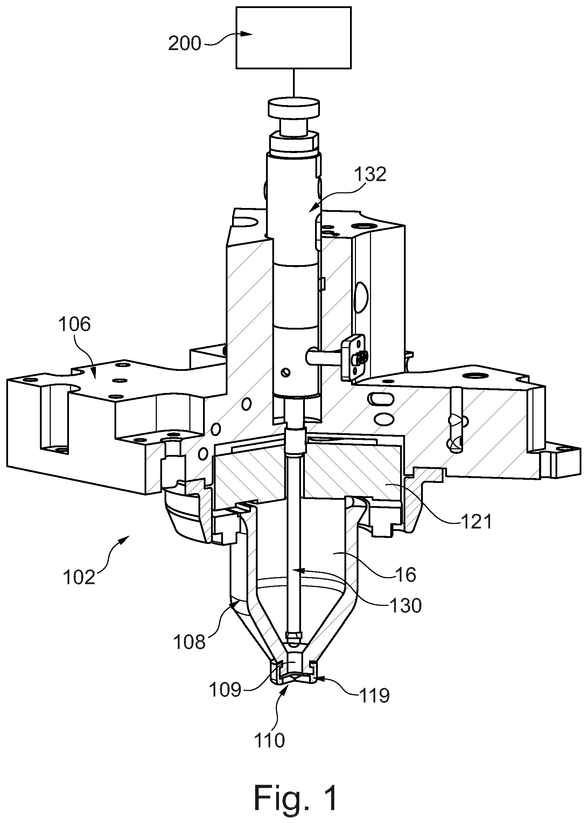

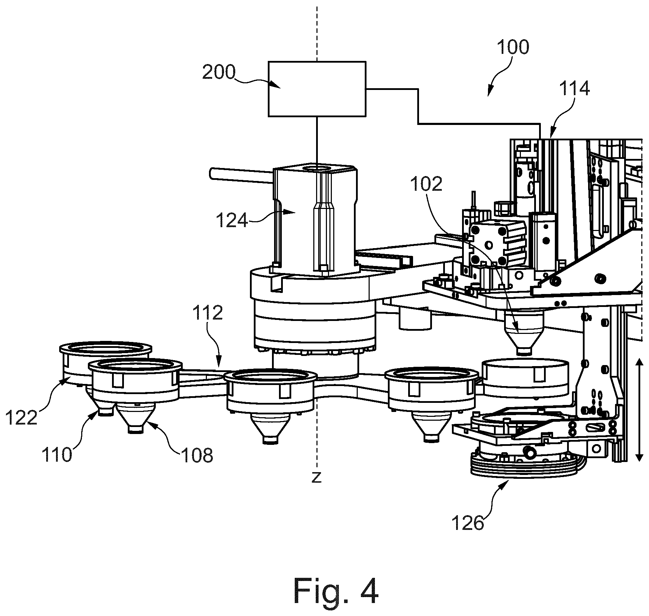

Fig. 1 zeigt einen beispielhaften Druckkopf 102 einer Vorrichtung 100 (siehe Fig. 4) zur additiven Fertigung eines Bauteils. Der Druckkopf 102 weist eine Basis 106 auf, an der ein Behälter 108 befestigt ist, der eine flüssige Schmelze eines Materials 16 aufnimmt. Der Begriff "Basis" soll hierin breit ausgelegt werden und bezeichnet im Wesentlichen den Teil des Druckkopfs, an dem der jeweilige Behälter 108 angebracht wird. Insbesondere versteht sich für den Fachmann, dass in der Basis 106 in der Regel ein Aktor 132 vorgesehen ist, der den ebenfalls an der Basis 106 angebrachten Kolben 130 bewegt, so dass dieser flüssiges Material 16 aus einer in dem Behälter 108 vorgesehenen Auslassöffnung 109 ausstößt. Zur Ansteuerung des Aktors 132 ist eine Steuerung 200 vorgesehen. Die Steuerung 200 ist ausgebildet zum Ansteuern des Druckkopfs 102 (insbesondere des Aktors 132) zum Aufbringen des flüssigen Materials 16 auf an sich bekannte Weise.

Der Kolben 130 kann beispielsweise durch einen Aktor 132 in Form eines Piezoaktuators axial bewegt werden und dabei flüssige Schmelze aus der Auslassöffnung 109 verdrängen. Dabei versteht sich, dass bei einigen Ausführungsformen in der Auslassöffnung 109 eine Führungshülse (nicht gezeigt) vorgesehen sein kann, die den Kolben 130 führt.

Am unteren Ende der Auslassöffnung 109 ist eine Düse 110 an dem Behälter 108 angebracht. Wie im Folgenden noch näher erläutert wird, kann beispielsweise das Bauteil mit der Düse 110 (z.B. eine Düsenplatte oder dergleichen) mittels eines Befestigungselements 119, beispielsweise eine Spannmutter, an dem Behälter 108 befestigt sein.

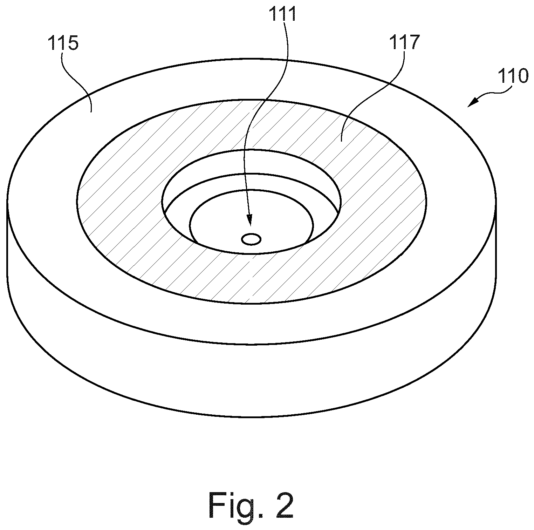

Fig. 2 zeigt eine beispielhafte Düse 110, die an dem Behälter 108 bzw. über den Behälter 108 an dem Druckkopf 102 befestigbar ist. Wie in Fig. 2 gezeigt, weist die Düse 110 eine Düsenöffnung 111 auf, die in Form eines Durchgangslochs durch eine Düsenplatte 115 ausgebildet ist. Die Düsenplatte kann beispielsweise aus Graphit bestehen. Es versteht sich, dass auch andere Materialien, beispielsweise verschiedene Metalle oder Legierungen daraus, verwendet werden können. Bei dem gezeigten Beispiel ist die Düsenplatte 115 im Wesentlichen kreisförmig ausgebildet, es versteht sich jedoch, dass die Form der Düsenplatte 115 nicht darauf beschränkt ist und beliebige andere Formen aufweisen kann.

Die Düsenöffnung 111 ist von einem plastisch verformbaren Dichtungsmaterial 117 zur Abdichtung gegenüber dem Behälter 108 umgeben. Insbesondere handelt es sich bei dem Dichtungsmaterial 117 um eine plastisch deformierbare Dichtung beispielsweise der Marke SI-GRAFLEX^{®}. Das Dichtungsmaterial 117 ist hochtemperaturbeständig und kann bei einigen Ausführungsformen um einen vorbestimmten Betrag, beispielsweise 100 bis 200 µm, von der Düsenplatte 115 vorstehen. Bei einigen Ausführungsformen kann das Dichtungsmaterial 117 aus mehreren Lagen bestehen, beispielsweise aus Graphit.

Während eines Betriebs wird die Düse 110 in einer bezüglich der Basis 106 ersten Montageposition lösbar an dem Drückkopf 102 befestigt. Wie in Fig. 1 gezeigt, bedeutet dabei eine Befestigung an dem Druckkopf 102 an der ersten Montageposition insbesondere eine Befestigung der Düse 110 über den Behälter 108 an der Basis 106 des Druckkopfs 102. Auf diese Weise weist die Düse 110 eine vorbestimmte Positionsbeziehung zu der Basis 106 auf, was der ersten Montageposition entspricht. Dabei versteht sich, dass die Relativpositionsbeziehung zwischen der Basis 106 und der Düse 110 anhand geeigneter Bezugspunkte beispielsweise an der Basis 106 auf geeignete Weise definiert werden kann. Beispielsweise kann die erste Montageposition durch einen Abstand entlang der Längsachse des Kolbens 130 von der Unterseite der Basis 106 und eine vorgegebene Position in der dazu senkrechten Ebene (beispielsweise auf der Längsachse) festgelegt sein.

Bei der Anbringung der Düse 110 mithilfe des Befestigungselements 119, beispielsweise eine Spannmutter, wird das Dichtungsmaterial 117 plastisch verformt und gewährleistet dadurch die gewünschte Abdichtung gegenüber dem Behälter 108 bzw. der nicht gezeigten Führungshülse desselben. Insbesondere in dem Fall, in dem das Dichtungsmaterial 117 aus mehreren Lagen dünner Schichten aufgebaut ist, kann Schmelze im Übergangsbereich in das Material diffundieren, so dass eine Barriere gebildet wird. Dadurch wird insbesondere auch bei Anlegen eines Überdrucks ein Auslaufen von flüssiger Schmelze unterbunden. Dabei kann dasselbe Dichtungsmaterial 117 zusätzlich auch zur Abdichtung des Behälters 108 gegenüber einer in Fig. 1 gezeigten Isolationsplatte 121 auf der anderen Seite des Behälters 108 vorgesehen werden.

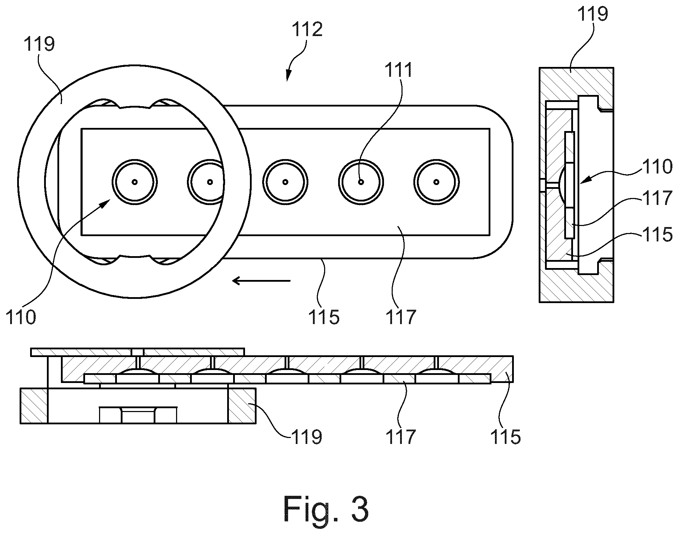

Während eines Fertigungsprozesses kann es nun notwendig werden, die Düse 110 auszutauschen. Daher weist eine hierin offenbarte Vorrichtung zur additiven Fertigung eines Bauteils neben dem Druckkopf 102 ein Magazin 112 mit mehreren Düsen 110 auf, die jeweils in der bezüglich der Basis 116 ersten Montageposition lösbar an den Druckkopf 102 befestigbar sind. Ein Beispiel für ein solches Magazin 112 ist in Fig. 3 gezeigt.

Wie in Fig. 3 gezeigt, weist das Magazin 112 einen Träger mit der Mehrzahl von Düsen 110 auf, der verschiebbar in dem Befestigungselement 119 gelagert ist. Bei der in Fig. 3 gezeigten Ausführungsform ist der Träger als integrierte Düsenplatte 115 ausgebildet, die die jeweiligen Düsenöffnungen 111 der Mehrzahl von Düsen 110 ausbildet. Mit anderen Worten, der Träger, der verschiebbar in dem Befestigungselement 119 gelagert ist, ist in Form einer im Wesentlichen rechteckigen Düsenplatte 115 ausgebildet, in der die mehreren Düsenöffnungen 111 als in einer Reihe angeordnete Durchgangsöffnungen ausgebildet sind. Bevorzugt ist das Dichtungsmaterial 117, das die jeweiligen Düsenöffnungen 111 umgibt, als ein einziges integriertes Dichtungselement auf der Düsenplatte 115 vorgesehen, wie dies in Fig. 3 gezeigt ist. Aus Fig. 3 ist ferner ersichtlich, dass bei Verschiebung des Trägers bzw. der Düsenplatte 115 in dem Befestigungselement 119 in der durch den Pfeil in Fig. 3 angegebenen Richtung eine erste der Düsenöffnungen 111 bzw. der zugehörigen Düsen 110 aus der Position im Zentrum des Befestigungselements 119 bewegt werden kann und eine darauffolgende Düsenöffnung 111 bzw. eine darauffolgende Düse 110 an diese Position bewegt werden kann. Somit versteht sich, dass bei an dem Behälter 108 befestigten Befestigungselement 119 auf diese Weise eine erste Düse 110 aus der ersten Montageposition bewegt werden kann und eine neue, in dem Magazin 112 aufgenommene Düse an die erste Montageposition bewegt werden kann. Dazu ist mindestens ein Aktuator 114, 124 (siehe Fig. 4) vorgesehen, der dazu ausgebildet ist, von der Steuerung 200 zum Verfahren des Druckkopfs 102 und/oder des Magazins 112 relativ zueinander angesteuert zu werden, so dass eine der mehreren Düsen 110 an die erste Montageposition bewegt wird.

Beispielsweise kann der mindestens eine Aktuator 114, 124 dazu verwendet werden, das in Fig. 3 gezeigte rechte Ende des Trägers bzw. der Düsenplatte 115 um einen vorbestimmten Betrag in Richtung nach links zu verschieben, so dass eine neue Düse 110 an der ersten Montageposition angeordnet wird. Alternativ dazu kann der mindestens eine Aktuator 114, 124 auch dazu angesteuert werden, den Druckkopf 102 mit dem daran befestigten Befestigungselement 119 so zu bewegen, dass das rechte Ende des Trägers 115 gegen einen dafür vorgesehenen Anschlag fährt und bei einer weiteren Bewegung des Druckkopfs in Richtung des Anschlags die neue Düse 110 an die erste Montageposition 106 bewegt wird. In beiden Fällen ist jedoch eine automatische Verschiebung des Trägers 115 und damit ein automatischer Wechsel der Düse 110 möglich, ohne dass der Prozess für einen längeren Zeitraum unterbrochen werden muss. Somit kann die Düse gewechselt werden, auch wenn die Düsenplatte die Temperatur des Tiegels aufweist und sich gegebenenfalls in einer inerten Atmosphäre befindet. Es versteht sich, dass der Widerstand, der zur Verschiebung des Trägers überwunden werden muss, groß genug eingestellt ist, dass eine ungewollte Verschiebung während der Fertigung möglichst ausgeschlossen ist.

Bei einigen Ausführungsformen kann vor der Verschiebung des Trägers beispielsweise das Befestigungselement 119 etwas gelöst werden, um die Verschiebung des Trägers zu erleichtern. Im Anschluss an die Verschiebung wird dann das Befestigungselement 119 erneut angezogen.

Auch wenn bei dem obigen Beispiel das Magazin 112 die integrierte Düsenplatte 115 mit dem integrierten Dichtungselement 117 aufweist, versteht sich, dass die vorliegende Erfindung nicht darauf beschränkt ist. So könnte beispielsweise ein geeigneter Träger verwendet werden, der in entsprechenden Aufnahmen (beispielsweise Vertiefungen) jeweils wie in Fig. 2 gezeigt einzelne Düsen 110 aufnehmen kann. Dabei muss der Träger nicht aus demselben Material wie die Düsenplatte 115 bestehen. Ferner versteht sich, dass die im Wesentlichen rechteckige Form des Trägers 115 ebenfalls nicht darauf beschränkt ist und geeignete Formen, beispielswiese Kreisbogensegmente und dergleichen, verwendet werden können, solange eine Verschiebung oder Verstellung des Trägers in dem entsprechend ausgebildeten Befestigungselement 119 auf die oben beschriebene Weise möglich ist.

Wie bereits erwähnt, kann es während des Fertigungsprozesses auch notwendig oder erwünscht sein, den Behälter 108 mit der Düse 110 zu wechseln. Dies wird im Folgenden anhand von Fig. 4 näher erläutert.

Wie in Fig. 4 gezeigt, weist das Magazin 112 eine Mehrzahl von Aufnahmen 122 auf, die jeweils ausgebildet sind zum Aufnehmen eines Behälters 108, der in einer bezüglich der Basis 106 des Druckkopfs 102 zweiten Montageposition lösbar an der Basis 106 befestigbar ist. Bei dem in Fig. 4 gezeigten Beispiel sind die jeweiligen Aufnahmen 122 als Hohlzylinder ausgebildet, in denen jeweils ein Behälter 108 von oben aufgenommen werden kann. Auch hier versteht sich, dass der Begriff "zweite Montageposition" breit aufzufassen ist und lediglich angibt, dass eine vorbestimmte Positionsbeziehung zwischen dem an der Basis 106 angebrachten Behälter 108 und der Basis 106 besteht, die auf geeignete Weise mittels Bezugspunkten beispielsweise an der Basis 106 definiert werden kann. Ferner versteht sich, dass, wenn der Behälter 108 an der zweiten Montageposition an der Basis befestigt ist, damit bevorzugt auch die an dem Behälter 108 angebrachte Düse 110 an der erste Montageposition ist. Das heißt, die in den jeweiligen Aufnahmen 122 aufgenommenen Behälter 108 weisen bevorzugt jeweils die Düsen 110 auf, die so an den entsprechenden Behältern angebracht sind, dass eine Düsenöffnung derselben in Fluidverbindung mit der Auslassöffnung 109 des Behälters steht. Dementsprechend kann auch das in Fig. 4 gezeigte Magazin 112 als ein Magazin aufgefasst werden, das mehrere Düsen 110 aufweist, die jeweils in einer bezüglich der Basis 106 ersten Montageposition lösbar an dem Druckkopf befestigbar sind (nämlich über die Befestigung des Behälters 108). Der mindestens eine Aktuator wird dabei ebenfalls so angesteuert, dass eine der mehreren Düsen (mit dem zugehörigen Behälter 108) an die erste Montageposition bewegt wird. Damit weist die in Fig. 4 gezeigte Ausführungsform zusätzlich zum Ermöglichen eines Austauschs des Behälters 108 ebenfalls die in Bezug auf Fig. 3 erläuterte Wirkung des Austauschs der Düse 110 auf.

Ein Austausch des Behälters 108 wird im Folgenden näher erläutert. Insbesondere ist die Steuerung 200 der in Fig. 4 gezeigten Vorrichtung 100 dazu ausgebildet, den mindestens einen Aktuator 114, 124 derart anzusteuern, dass eine erste, leere Aufnahme 122 an einer Position benachbart zu einem an der Basis 106 befestigten ersten Behälter 108 und in einem vorbestimmten Abstand zu demselben angeordnet wird. Beispielsweise kann mit der in Fig. 4 gezeigten Vorrichtung, bei der die mehreren Aufnahmen 122 an mehreren in radialer Richtung verlaufenden Armen vorgesehen sind und um eine Schwenkachse Z verschwenkt werden können, eine Drehung um die Schwenkachse Z durch einen Aktuator 124 erfolgen, so dass eine leere Aufnahme 122 unterhalb des an dem Druckkopf 102 angebrachten Behälters 108 positioniert wird.

Dann wird der mindestens eine Aktuator 114, 124 so angesteuert, dass eine Relativbewegung in der Z-Richtung zwischen dem befestigten Behälter 108 und dessen Aufnahme 122 stattfindet, so dass sich der befestigte erste Behälter in der ersten Aufnahme 122 befindet. Beispielsweise kann der Aktuator 114 den Druckkopf 102 (ggf. mitsamt dem daran angebrachten Magazin 112) in der Z-Richtung absenken, bis der Behälter in der Aufnahme 122 platziert ist. Dann kann die Befestigung des ersten Behälters 108 auf geeignete Weise gelöst werden, und der in der ersten Aufnahme 122 aufgenommene gelöste erste Behälter 108 kann aus der zweiten Montageposition an eine zu dieser unterschiedlichen Position bewegt werden. Dabei versteht sich, dass in der Regel der Kolben 130 (siehe Fig. 1) von der Basis 106 vorsteht. Das heißt, in der Regel ist eine Bewegung des gelösten Behälters mitsamt seiner Aufnahme weg von der Basis 106 erforderlich, um ein erneutes Verschwenken um die Schwenkachse Z durchzuführen. Anschließend kann dann eine zweite Aufnahme 122 mit einem darin aufgenommenen (neuen) zweiten Behälter 108 derart bewegt werden, dass der zweite Behälter an die zweite Montageposition gebracht wird. Es versteht sich, dass dabei neben einer Schwenkbewegung erneut eine Bewegung in der Z-Richtung hin zu der Basis 106 erforderlich sein kann. Abschließend kann dann der zweite Behälter auf geeignete Weise an der Basis 106 befestigt werden. Wie bereits erwähnt kann, da der Behälter 108 in der Regel bereits mit einer Düse 110 oder unter Umständen auch mit einem in Fig. 3 gezeigten Düsenmagazin versehen ist, dies auch als Düsenwechsel aufgefasst werden.

Es versteht sich, dass zum Durchführen des oben erläuterten Wechsels des Behälters 108 in einem vorherigen Schritt zunächst einmal die den Behälter 108 umgebenden weiteren Bestandteile des Druckkopfs 102 von diesem entfernt werden müssen. Beispielsweise muss der in Fig. 4 gezeigte Endtopf 126 mit Heizung, Schutzgasführung etc. nach unten gefahren werden, um den Behälter 108 freizulegen.

Mit dem oben beschriebenen System kann der gesamte Wechselprozess ohne längere Abkühlphasen der einzelnen Teilkomponenten durchgeführt werden. Die gebrauchten Behälter können nach einem Abkühlen bereits während des laufenden Druckprozesses oder am Ende desselben aus dem Tiegelwechsler entnommen und gereinigt werden.

Für den Fall, dass bei der Fertigung unterschiedliche Materialien verarbeitet werden sollen, ist neben dem oben erläuterten Wechsel des Behälters 108 in der Regel auch ein Wechsel des Kolbens 130 notwendig. Da insbesondere im Falle einer Verwendung eines Piezoaktuators als den Aktor 132 (siehe Fig. 1) der Kolben 130 zur Erzeugung von Tropfen mit einer definierten Kraft in Bezug auf den Piezoaktuator vorgespannt sein muss, muss zum Lösen des Kolbens 130 das System zunächst entspannt werden, was im Folgenden näher erläutert wird.

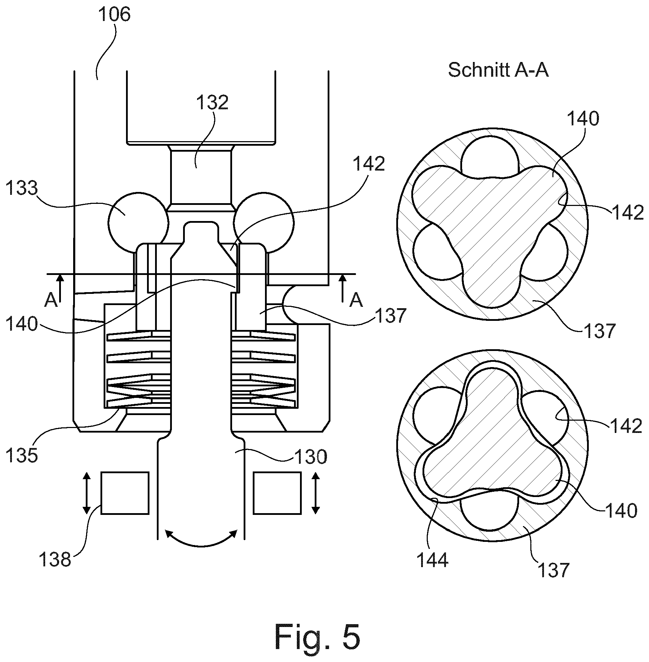

Fig. 5 zeigt auf der linken Seite eine schematische Ansicht eines oberen Endes des Kolbens 130, der an der Basis 106 gelagert ist. Insbesondere ist das obere Ende des Kolbens 130 durch ein Haltebauteil 137 gehalten, das mit dem Kolben 130 gegen die Basis 106 vorgespannt ist. So ist ein geeignetes Vorspannelement, beispielsweise eine Feder 135, an der Basis 106 abgestützt und spannt das Haltebauteil 137, in dem das obere Ende des Kolbens 130 aufgenommen ist, in Richtung zu der Basis 106 (nach oben) vor, beispielsweise gegen eine (nicht gezeigte) lösbar mit der Basis 106 verbundene Hülse des Aktors 132. Der Aktor 132, beispielsweise ein Piezoaktuator, ist beispielsweise so in der Basis 106 vorgesehen, dass sein unteres Ende im Wesentlichen an dem oberen Ende des Kolbens 130 anliegt, so dass bei einer Betätigung desselben der Kolben mitsamt Haltebauteil 137 nach unten in Richtung der Auslassöffnung 109 bewegt wird.

Damit durch eine auf geeignete Weise um oder bei dem Kolben 130 vorgesehene Kolbeneingriffsvorrichtung 138 der Kolben entnommen werden kann, muss zunächst der Kolben 130 von dem Aktor 132 entfernt werden. Dazu ist eine Trenneinrichtung 133 in Form von beispielsweise Eingriffsöffnungen in der Basis 106 vorgesehen, mittels derer durch Einführen eines geeigneten Werkzeugs das Haltebauteil 137 gegen die Vorspannung weg von der Basis 106 bewegt werden kann. Zum automatischen Entnehmen und erneuten Einsetzen des Kolbens 130 kann die Steuerung 200 dazu ausgebildet sein, die Kolbeneingriffsvorrichtung 138 (beispielsweise ein herkömmliches Greifelement oder dergleichen) zum Ineingriffnehmen und Entnehmen des in Eingriff genommenen Kolbens 130 aus dem Haltebauteil 137 bei von der Basis 106 wegbewegtem Haltebauteil 137 anzusteuern.

Bei einer Ausführungsform weist das obere Ende des Kolbens 130 mindestens eine radial vorstehende Nase 140 auf, die in einer entsprechenden Führungsnut 142 des Haltebauteils 137 aufgenommen ist und eine Bewegung des Kolbens 130 in der Längsrichtung desselben sowie in Umfangsrichtung begrenzt. Die Führungsnut 142 ist also in der Z-Richtung nicht durchgängig, sondern das untere Ende derselben bildet einen Anschlag aus. Dies ist in den beiden Schnittansichten entlang der Linie A-A auf der rechten Seite in Fig. 5 dargestellt. Bei dem in Fig. 5 gezeigten Beispiel sind drei Nasen 140 vorgesehen. Der obere Teil der rechten Seite der Darstellung zeigt dabei den Zustand, in dem die Nasen 140 in den entsprechenden Führungsnuten 142 aufgenommen ist, so dass keine Bewegung des Kolbens in Umfangsrichtung oder nach unten möglich ist.

Nachdem jedoch über die Trenneinrichtung 133 das Haltebauteil mit dem Kolben 130 entspannt worden ist, kann mittels der Kolbeneingriffsvorrichtung 138 der Kolben in Richtung der Basis 106 bewegt und um die Längsachse desselben um einen vorbestimmten Winkel, beispielsweise 60°, gedreht werden, wodurch die radial vorstehenden Nasen 140 mit entsprechenden Entnahmenuten 144 in dem Haltebauteil 137 ausgerichtet sind. Anders als die Führungsnuten 142 sind die Entnahmenuten 144 dabei durch das gesamte Haltebauteil 137 ausgebildet, so dass der geneignet positionierte Kolben 130 nach unten aus dem Haltebauteil 137 und der Basis 106 entnommen werden kann.

Es versteht sich, dass die in Fig. 5 gezeigte Trenneinrichtung 133 in Form der Eingriffsöffnungen lediglich beispielhaft ist und beliebige andere Mechanismen zum Aufheben der Vorspannung und Ermöglichen der Bewegung des Kolbens 130 in Richtung des Aktors 132 verwendet werden können, um den automatischen Kolbenwechsel zu ermöglichen.

Ferner versteht sich, dass der oben erläuterte Kolbenwechsel insbesondere dann von Vorteil ist, wenn der in Zusammenhang mit Fig. 4 beschriebene Wechsel des Behälters 108 durchgeführt wird.

Insgesamt wird bei den oben beschriebenen Vorrichtungen bzw. Verfahren ein Wechsel sämtlicher Komponenten des Druckkopfs 102, die einerseits einem Verschleiß unterliegen und andererseits eine flexiblere Fertigung unter Verwendung beispielsweise unterschiedlicher Materialien und dergleichen ermöglichen, während eines Prozesses ermöglicht. Somit kann eine Gesamteffizienz der Fertigung bzw. des Fertigungsprozesses erhöht werden, da ein Austausch von Teilen durchgeführt werden kann, ohne dass die Fertigung gestoppt werden muss, sämtliche Komponenten des Druckkopfs 102 abkühlen müssen, und dergleichen.

## Patentansprüche

1. Vorrichtung (100) zur additiven Fertigung eines Bauteils, mit:
einem Druckkopf (102), der zum Aufbringen eines flüssigen Materials (16) ausgebildet ist, wobei der Druckkopf eine Basis (106) aufweist;
einer Steuerung (200), die ausgebildet ist zum Ansteuern des Druckkopfs (102) zum Aufbringen des flüssigen Materials (16);
einem Magazin (112) mit mehreren Düsen (110), die jeweils in einer bezüglich der Basis (106) ersten Montageposition lösbar an dem Druckkopf befestigbar sind, wobei das Magazin (112) eine Mehrzahl von Aufnahmen (122) aufweist, die jeweils ausgebildet sind zum Aufnehmen eines Behälters (108), der zur Aufnahme des flüssigen Materials (16) ausgebildet ist und in einer bezüglich der Basis (106) zweiten Montageposition lösbar an der Basis befestigbar ist, wobei die mehreren Düsen (110) jeweils an einem in einer der Aufnahmen (122) aufgenommenen Behälter (108) vorgesehen sind, so dass eine Düsenöffnung (111) der Düse (110) in Fluidverbindung mit einer in dem Behälter ausgebildeten Auslassöffnung (109) steht; und
mindestens einem Aktuator (114, 124), der dazu ausgebildet ist, von der Steuerung (200) zum Verfahren des Druckkopfs (102) und/oder des Magazins (112) relativ zueinander angesteuert zu werden, so dass eine der mehreren Düsen (110) an die erste Montageposition bewegt wird,
**gekennzeichnet dadurch, dass** die Steuerung (200) ausgebildet ist zum Ansteuern des mindestens einen Aktuators (114, 124) zum Bewegen einer ersten, leeren Aufnahme (122) an eine Position benachbart zu einem an der Basis (106) befestigten ersten Behälter (108) und in einem vorbestimmten Abstand zu demselben, Bewegen des befestigten ersten Behälters (108) und der ersten Aufnahme (122) relativ zueinander, so dass sich der befestigte erste Behälter in der ersten Aufnahme (122) befindet, Lösen der Befestigung des ersten Behälters (108), Bewegen des in der ersten Aufnahme (122) aufgenommenen ersten Behälters (108) an eine zu der zweiten Montageposition unterschiedliche Position, Bewegen einer zweiten Aufnahme (122) mit einem darin aufgenommenen zweiten Behälter (108) derart, dass der zweite Behälter an der zweiten Montageposition angeordnet ist, und Befestigen des zweiten Behälters an der Basis (106),
dadurch , dass die Vorrichtung (100) ferner aufweist:
ein beweglich an der Basis (106) gelagertes Haltebauteil (137), das ein oberes Ende eines Kolbens (130) hält, wobei das Haltebauteil (137) mit dem Kolben (130) gegen die Basis (106) vorgespannt ist;
eine Trenneinrichtung (133), die ausgebildet ist zum Bewegen des Haltebauteils (137) gegen die Vorspannung; und
eine Kolbeneingriffsvorrichtung (138), die ausgebildet ist zum Eingriff mit dem Kolben (130) bei gelöstem Behälter (108),
und dadurch , dass die Steuerung (200) dazu ausgebildet ist, die Kolbeneingriffsvorrichtung (138) zum Entnehmen des in Eingriff genommenen Kolbens (130) aus dem Haltebauteil (137) bei von der Basis (106) weg bewegtem Haltebauteil (137) anzusteuern.

2. Vorrichtung nach Anspruch 1, bei der die Mehrzahl von Aufnahmen (122) verschwenkbar um eine Schwenkachse (Z) angeordnet sind und ein erster Aktuator (124) ausgebildet ist zum Verschwenken der Mehrzahl von Aufnahmen (122) um die Schwenkachse (Z),
optional mit einem zweiten Aktuator zum Bewegen der Mehrzahl von Aufnahmen (122) in einer Richtung entlang der Schwenkachse (Z).

3. Vorrichtung nach Anspruch 1 oder 2, ferner mit einer Abdeckung (126), die zum Abdecken und Beheizen des an der zweiten Montageposition befestigten Behälters (108) an der Basis (106) befestigbar ist,
bei der ein dritter Aktuator (114) zum Bewegen der gelösten Abdeckung (126) weg von der Basis (106) zum Freilegen des Behälters (108) ausgebildet ist.

4. Vorrichtung nach einem der Ansprüche 1 bis 3, bei der sich der erste Behälter und der zweite Behälter (108) hinsichtlich mindestens des in diesen aufgenommenen flüssigen Materials (16) oder eines Durchmessers der Düsenöffnung (111) der zugehörigen Düse (110) unterscheiden.

5. Vorrichtung nach einem der Ansprüche 1 bis 4, bei der das obere Ende des Kolbens (130) mindestens eine radial vorstehende Nase (140) aufweist, die in einer entsprechenden Führungsnut (142) des Haltebauteils (137) aufgenommen ist und eine Bewegung des Kolbens (130) in der Längsrichtung desselben begrenzt,
bei der die Steuerung (200) ausgebildet ist zum Ansteuern der Kolbeneingriffsvorrichtung (138) zum Drehen des Kolbens um die Längsachse desselben um einen vorbestimmten Winkel, optional nach einem Bewegen des Kolbens in Richtung der Basis (106), und Bewegen des gedrehten Kolbens weg von der Basis (106) zum Entnehmen desselben aus dem Haltebauteil (137).

6. Vorrichtung nach einem der Ansprüche 1 bis 5, bei der die Trenneinrichtung (133) mindestens eine in der Basis ausgebildete Eingriffsöffnung aufweist, durch die eine Trennvorrichtung, beispielsweise ein Keil, zwischen die Basis (106) und das Haltebauteil (137) zum Trennen derselben voneinander einführbar ist.

## Claims

1. Device (100) for additive manufacturing of a component, including:
a printhead (102) that is configured to apply a liquid material (16), wherein the printhead includes a base (106);
a controller (200) that is configured to control the printhead (102) to apply the liquid material (16);
a magazine (112) having multiple nozzles (110), which are each detachably fastenable to the printhead in a first mounting position relative to the base (106), wherein the magazine (112) includes a plurality of receptacles (122) that are each configured to receive a reservoir (108), which is configured to contain the liquid material (16) and is detachably fastenable to the base in a second mounting position relative to the base (106),
wherein the multiple nozzles (110) are each provided on a reservoir (108) received in one of the receptacles (122) so that a nozzle opening (111) of the nozzle (110) is in fluid communication with an outlet opening (109) formed in the reservoir; and
at least one actuator (114, 124) that is configured to be controlled by the controller (200) to move the printhead (102) and/or the magazine (112) relative to each other so that one of the multiple nozzles (110) is moved to the first mounting position,
**characterized in that**
the controller (200) is configured to control the at least one actuator (114, 124) to move a first, empty receptacle (122) to a position adjacent to and at a predetermined distance from a first reservoir (108) that is fastened to the base (106), move the fastened first reservoir (108) and the first receptacle (122) relative to each other so that the fastened first reservoir is located in the first receptacle (122), release the fastening of the first reservoir (108), move the first reservoir (108) received in the first receptacle (122) to a position different from the second mounting position, move a second receptacle (122) having a second reservoir (108) received therein such that the second reservoir is disposed at the second mounting position, and fasten the second reservoir to the base (106),
**in that** the device (100) further comprises:
a retaining member (137), which holds an upper end of a piston (130), which is movably mounted on the base (106), wherein the retaining member (137) is biased with the piston (130) against the base (106);
a separating apparatus (133) that is configured to move the retaining member (137) against the biasing; and
a piston engagement device (138) that is configured to engage with the piston (130) when the first reservoir (108) is released,
and **in that**
the controller (200) is configured to control the piston engagement device (138) to remove the grasped piston (130) from the retaining member (137) when the retaining member (137) moves away from the base (106.

2. Device according to claim 1, wherein the plurality of receptacles (122) are disposed so as to be pivotable about a pivot axis (Z) and a first actuator (124) is configured to pivot the plurality of receptacles (122) about the pivot axis (Z),
optionally having a second actuator for moving the plurality of receptacles (122) in a direction along the pivot axis (Z).

3. Device according to claim 1 or 2, further including a cover (126) that is fastenable to the base (106) for covering and heating the reservoir (108) fastened at the second mounting position,
wherein a third actuator (114) is configured to move the released cover (126) away from the base (106) to expose the reservoir (108).

4. Device according to one of claims 1 to 3, wherein the first reservoir and the second reservoir (108) differ with respect to at least one of the liquid material (16) contained therein or of a diameter of the nozzle opening (111) of the associated nozzle (110).

5. Device according to one of claims 1 to 4, wherein the upper end of the piston (130) includes at least one radially projecting overhang (140) that is received in a corresponding guide groove (142) of the retaining member (137) and limits movement of the piston (130) in the longitudinal direction thereof,
wherein the controller (200) is configured to control the piston engagement device (138) to rotate the piston about the longitudinal axis thereof by a predetermined angle, optionally after movement of the piston toward the base (106), and to move the rotated piston away from the base (106) to remove it from the retaining member (137).

6. Device according to one of claims 1 to 5, wherein the separating apparatus (133) includes at least one inlet opening formed in the base through which a separating device, such as a wedge, is insertable between the base (106) and the retaining member (137) to separate them from each other.

## Revendications

1. Dispositif (100) de fabrication additive d'un composant, comportant :
une tête d'impression (102), qui est conçue pour appliquer un matériau liquide (16), la tête d'impression comprenant une base (106) ;
une unité de commande (200), qui est conçue pour commander la tête d'impression (102) pour appliquer le matériau liquide (16) ;
un magasin (112) doté de plusieurs buses (110), qui peuvent être fixées chacune de manière amovible à la tête d'impression dans une première position de montage par rapport à la base (106), le magasin (112) comprenant une pluralité de logements (122), qui sont conçus chacun pour recevoir un récipient (108), qui est conçu pour recevoir le matériau liquide (16) et qui peut être fixé de manière amovible à la base dans une deuxième position de montage par rapport à la base (106), les plusieurs buses (110) étant prévues chacune sur un récipient (108) reçu dans l'un des logements (122), de sorte qu'une ouverture de buse (111) de la buse (110) est en communication fluidique avec une ouverture de sortie (109) formée dans le récipient ; et
au moins un actionneur (114, 124), qui est conçu pour être commandé par l'unité de commande (200) pour déplacer la tête d'impression (102) et/ou le magasin (112) l'un(e) par rapport à l'autre, de sorte que l'une des plusieurs buses (110) est déplacée vers la première position de montage,
**caractérisé en ce que**
l'unité de commande (200) est conçue pour commander l'au moins un actionneur (114, 124) pour déplacer un premier logement vide (122) vers une position adjacente à un premier récipient (108) fixé à la base (106) et à une distance prédéterminée de celui-ci, déplacer le premier récipient (108) fixé et le premier logement (122) l'un par rapport à l'autre, de sorte que le premier récipient fixé se trouve dans le premier logement (122), libérer la fixation du premier récipient (108), déplacer le premier récipient (108) reçu dans le premier logement (122) vers une position différente de la deuxième position de montage, déplacer un deuxième logement (122) avec un deuxième récipient (108) reçu dans celui-ci de telle sorte que le deuxième récipient est agencé au niveau de la deuxième position de montage, et fixer le deuxième récipient à la base (106),
**en ce que**
le dispositif (100) comporte en outre :
un composant de maintien (137) monté de manière mobile sur la base (106), qui maintient une extrémité supérieure d'un piston (130), le composant de maintien (137) étant précontraint avec le piston (130) contre la base (106) ;
un dispositif de séparation (133), qui est conçu pour déplacer le composant de maintien (137) à l'encontre de la précontrainte ; et
un dispositif d'engagement de piston (138), qui est conçu pour venir en engagement avec le piston (130) lorsque le récipient (108) est libéré,
et **en ce que**
l'unité de commande (200) est conçue pour commander le dispositif d'engagement de piston (138) pour extraire le piston (130) mis en engagement hors du composant de maintien (137) lorsque le composant de maintien (137) est écarté de la base (106).

2. Dispositif selon la revendication 1, dans lequel la pluralité de logements (122) sont agencés de manière pivotante autour d'un axe de pivotement (Z) et un premier actionneur (124) est conçu pour faire pivoter la pluralité de logements (122) autour de l'axe de pivotement (Z),
optionnellement doté d'un deuxième actionneur pour déplacer la pluralité de logements (122) dans une direction le long de l'axe de pivotement (Z).

3. Dispositif selon la revendication 1 ou 2, comportant en outre un couvercle (126), qui peut être fixé à la base (106) pour couvrir et chauffer le récipient (108) fixé au niveau de la deuxième position de montage,
dans lequel un troisième actionneur (114) est conçu pour écarter le couvercle (126) libéré de la base (106) pour exposer le récipient (108).

4. Dispositif selon l'une des revendications 1 à 3, dans lequel le premier récipient et le deuxième récipient (108) diffèrent au moins en ce qui concerne le matériau liquide (16) reçu dans ceux-ci ou un diamètre de l'ouverture de buse (111) de la buse (110) associée.

5. Dispositif selon l'une des revendications 1 à 4, dans lequel l'extrémité supérieure du piston (130) présente au moins un ergot (140) faisant saillie radialement, qui est reçu dans une rainure de guidage (142) correspondante du composant de maintien (137) et limite un mouvement du piston (130) dans la direction longitudinale de celui-ci,
dans lequel l'unité de commande (200) est conçue pour commander le dispositif d'engagement de piston (138) pour faire tourner le piston autour de l'axe longitudinal de celui-ci d'un angle prédéterminé, optionnellement après un déplacement du piston en direction de la base (106), et écarter le piston tourné de la base (106) pour extraire celui-ci du composant de maintien (137).

6. Dispositif selon l'une des revendications 1 à 5, dans lequel le dispositif de séparation (133) présente au moins une ouverture d'engagement formée dans la base, à travers laquelle un dispositif de séparation, par exemple une cale, peut être introduit entre la base (106) et le composant de maintien (137) pour séparer ceux-ci l'un(e) de l'autre.
